# EUROPEAN PATENT APPLICATION

(11) **EP 4 715 989 A1**
(43) Date of publication of application: **25.03.2026**
(21) Application number: 24814399.2
(22) Date of filing: 27.05.2024
(51) Int. Cl.: H01M 50/30, H01M 50/358, H01M 50/209, H01M 50/244

(54) **PROTECTIVE PLATE, HOUSING, AND BATTERY PACK**

(30) Priority: 26.05.2023 CN 202321312010 U
(71) Applicant: SVOLT Energy Technology Co., Ltd., Changzhou, Jiangsu 213200 (CN)
(72) Inventor: BAI, Jianwei, hangzhou, Jiangsu 213200 (CN); REN, Fei, hangzhou, Jiangsu 213200 (CN)
(74) Representative: Michalski Hüttermann & Partner Patentanwälte mbB
(86) International application number: PCT/CN2024/095596
(87) International publication number: WO 2024/245202

(57) **Abstract**

The present application relates to the field of battery pack protective structures, and more particularly to a protective plate, a housing, and a battery pack. The main body is provided with a plurality of exhaust portions and a plurality of connecting portions, and the plurality of exhaust portions and the plurality of connecting portions are sequentially and alternately provided in a first direction; each of the exhaust portions is formed into a recessed structure passing through opposite end portions of the main body in a second direction, and each of the connecting portions is provided with a cavity passing through the opposite end portions of the main body in the second direction; when the main body is connected to a battery cell module, the connecting portions are bonded to the battery cell module, and the openings of the exhaust portions face an explosion-proof valve of the battery cell module.

## Description

### CROSS-REFERENCE TO RELATED APPLICATIONS

The present application claims priority to Chinese Patent Application No. CN202321312010.X, filed with the China Patent Office on May 26, 2023, titled "Protective Plate, Housing, and Battery Pack," the entire contents of which are incorporated herein by reference.

### TECHNICAL FIELD

The present application relates to the field of the protective structure of battery pack, specifically, to a protective plate, a housing, and a battery pack.

### BACKGROUND

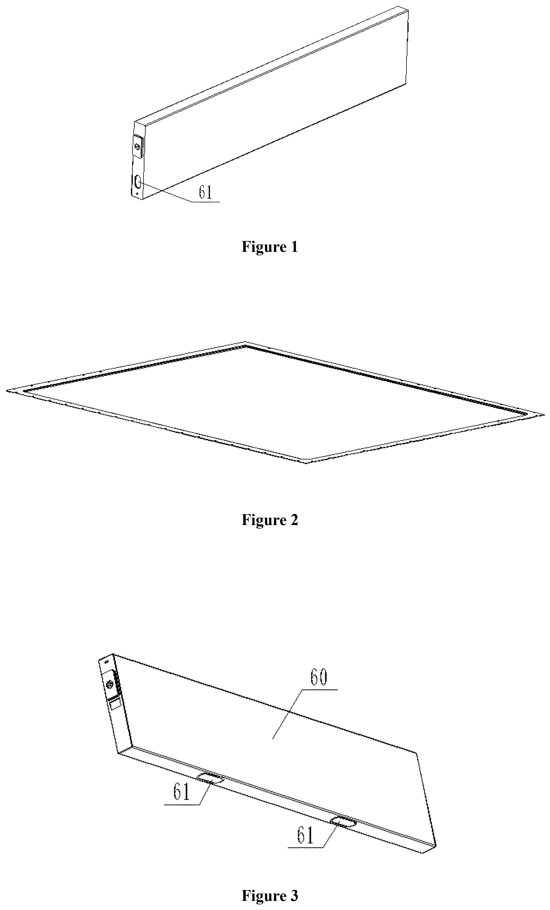

Currently, blade-shaped prismatic battery cells have become the predominant battery cell type in power batteries due to their high safety, high energy density, low cost, and thermal stability. The explosion-proof valve of a typical blade-shaped battery cell is located on the side of the battery cell (as shown in Figure 1). This allows for a certain amount of deformation at the bottom of the battery cell. Therefore, the existing battery cell bottom protection solution involves installing an MPP material member and a flat metal bottom guard plate at the bottom of the battery cell module (as shown in Figure 2). However, with increasing demand for thermal safety performance in power batteries, blade-shaped battery cells with bottom-mounted explosion-proof valves (as shown in Figure 3) are gaining market share. If the existing battery cell bottom protection solution is still used, the metal bottom guard plate could squeeze the explosion-proof valve, which is relatively fragile. Even minor deformation of the explosion-proof valve can lead to cracking, leakage, and insulation failure. Furthermore, the existing metal bottom guard plate lacks a corresponding exhaust channel, making it ineffective in directing the thermal runaway airflow (i.e., the high-pressure gas discharged from the explosion-proof valve). Furthermore, the existing metal bottom guard plate is connected to the battery cell module using bolts and gaskets, which can easily cause seal failure if a ball strikes the bottom. In other words, the existing battery cell bottom protection solution is no longer applicable to blade-type battery cells with explosion-proof valves placed at the bottom.

### SUMMARY OF APPLICATION

In view of this, an object of the present application is to provide a protective plate, a housing, and a battery pack to address the problem that existing battery cell bottom protection solutions are unsuitable for blade-style battery cells with bottom-mounted explosion-proof valves.

To achieve the above object, embodiments of the present application employ the following technical solutions:
The first aspect of the present application provides a protective plate, including a main body, wherein the main body is provided with a plurality of exhaust portions and a plurality of connecting portions, and the plurality of exhaust portions and the plurality of connecting portions are sequentially and alternately provided in a first direction; each of the exhaust portions is formed into a recessed structure passing through opposite end portions of the main body in a second direction, and each of the connecting portions is provided with a cavity passing through the opposite end portions of the main body in the second direction; when the main body is connected to a battery cell module, the connecting portions are bonded to the battery cell module, and the openings of the exhaust portions face an explosion-proof valve of the battery cell module.

Furthermore, the first direction is perpendicular to the second direction, and when the main body is connected to the battery cell module, the second direction is the same as a formation direction of the battery cell module.

Furthermore, two side walls of the exhaust portion are formed into a bent structure in which the two side walls are symmetrical to each other; the side wall includes a first inclined section, a horizontal section, and a second inclined section, which are sequentially connected, the first inclined section is connected to the bottom of the exhaust portion, and the second inclined section is connected to the top of the connecting portion.

Furthermore, the horizontal section is provided with a shielding member extending in the second direction; when the main body is connected to the battery cell module, the shielding member abuts the bottom of the battery cell module.

Furthermore, the interior of the exhaust portion is lined with a high-temperature resistant and fireproof component to form a high-temperature resistant and fireproof layer.

Furthermore, the top of the connecting portion is bonded to the bottom of the battery cell module.

Furthermore, the thickness of the cavity is 10 mm to 15 mm.

Furthermore, the main body is provided with a reinforcing layer, and when the main body is connected to the battery cell module, the reinforcing layer is located on the side of the main body away from the battery cell module.

The second aspect of the present application provides a housing, wherein the bottom of the housing is provided with the protective plate described above.

The third aspect of the present application provides a battery pack, wherein the battery pack is provided with the housing described above.

Compared to the prior art, the present application has the following advantageous effects:
According to the protective plate, housing, and battery pack of the present application, the plurality of exhaust portions provided on the top of the protective plate enable the openings of the exhaust portions to face the explosion-proof valve at the bottom of the battery cell module when the main body is connected to the battery cell module. The exhaust portions extend through opposite end portions of the main body to form exhaust channels corresponding to the explosion-proof valves, effectively guiding the flow of high-pressure gas discharged by the explosion-proof valves and thereby preventing thermal runaway.

Furthermore, the explosion-proof valve is correspondingly arranged above the exhaust portion formed into a recessed structure, which can effectively avoid the main body squeezing the explosion-proof valve. Furthermore, the main body of the protective plate is bonded to the battery cell module via connecting portions, and the connecting portions and the exhaust portions are alternately arranged. Moreover, each of the connecting portions is also provided with a cavity, which effectively reduces the risk of failure compared with the existing connection method of the combination of bolts and sealing gaskets.

### BRIEF DESCRIPTION OF THE DRAWINGS

To more clearly illustrate the embodiments of the present application or the technical solutions in the prior art, the following briefly describes the drawings required for descriptions of the embodiments or prior art. Obviously, the drawings described below represent some embodiments of the present application. Those skilled in the art can derive other drawings based on these drawings without inventive effort.
Figure 1 is a schematic diagram of a battery cell with a side-mounted explosion-proof valve in the prior art;
Figure 2 is a metal bottom guard plate in the prior art;
Figure 3 is a schematic diagram of a battery cell with a bottom-mounted explosion-proof valve in the prior art;
Figure 4 is a schematic diagram of the main body according to an embodiment of the present application;
Figure 5 is a partial cross-sectional view of the protective plate connected to the battery cell module according to an embodiment of the present application;
Figure 6 is a partial exploded schematic diagram of the battery pack according to an embodiment of the present application.

### Reference numbers:

1-Main body; 10-Exhaust portion; 101-First inclined section; 102-Horizontal section; 103-Second inclined section; 11-Connecting portion; 110-Cavity; 111-Reinforcing rib; 2-Structural adhesive; 3-Shielding member; 4-High-temperature resistant and fireproof layer; 5-Reinforcing layer; 6-Battery cell module; 60-Battery cell; 61-Explosion-proof valve; 7-Side housing.

### DETAILED DESCRIPTION OF EMBODIMENTS

The following will provide a clear and complete description of the technical solutions of the present application, in conjunction with the accompanying drawings. Obviously, the embodiments described are only some, and not all, of the embodiments of the present application.

Generally, the components of the embodiments of the present application described and illustrated in the drawings herein may be arranged and designed in a variety of different configurations. Therefore, the following detailed description of the embodiments of the present application provided in the drawings is not intended to limit the scope of the claimed application, but rather merely represents selected embodiments of the present application.

All other embodiments derived by those skilled in the art based on the embodiments of the present application without inventive effort are within the scope of protection of the present application.

In the description of the present application, it should be noted that the terms "center," "upper," "lower," "left," "right," "vertical," "horizontal," "inner," and "outer," etc., indicating positions or locations, are based on the positions or locations shown in the drawings and are intended solely to facilitate the description of the present application and simplify the description. They are not intended to indicate or imply that the devices or components referred to must have a specific orientation, be constructed, or operate in a specific orientation, and are therefore not to be construed as limiting the present application. Furthermore, the terms "first," "second," and "third" are used for descriptive purposes only and are not to be construed as indicating or implying relative importance.

In the description of the present application, it should be noted that, unless otherwise expressly specified or limited, the terms "mounted," "interconnected," and "connected" should be understood in a broad sense. For example, they can refer to fixed connections, detachable connections, or integral connections; mechanical connections or electrical connections; direct connections or indirect connections through an intermediate medium; and internal connections between two components. Those skilled in the art will understand the specific meanings of the above terms in the present application based on the specific circumstances.

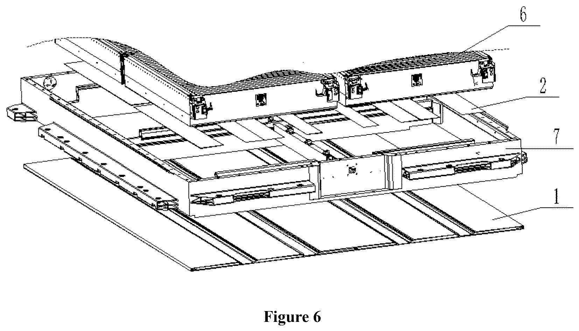

As shown in Figures 3 to 6, according to the first aspect of the present application, a protective plate is provided for protecting the bottom of a battery cell 60 with a bottom-mounted explosion-proof valve 61. The specific structure of the protective plate according to the present application will be described in detail below. It should be noted that stacking a plurality of battery cells 60 in sequence to form a battery cell module 6 is a conventional technique in the art and will not be further described. Furthermore, the stacking direction of the plurality of battery cells 60 corresponds to the formation direction of the battery cell module 6.

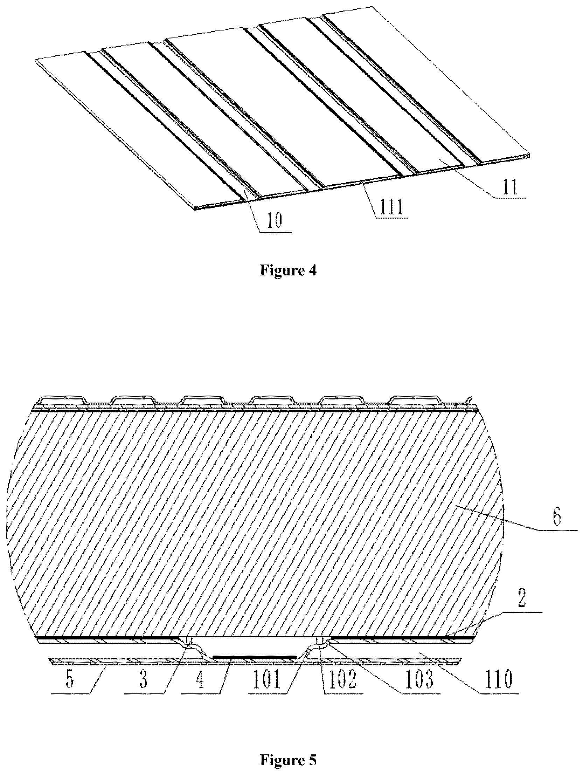

In the present embodiment, as shown in Figures 4 and 5, the protective plate includes a main body 1 with a substantially rectangular parallelepiped structure. This structure facilitates assembly of the main body 1 with components such as a side housing 7 to form a housing for the battery cell module 6. This structure also enhances the stability of the protective plate when supporting the battery cell module 6. Specifically, the top of the main body 1 is formed with a plurality of exhaust portions 10 and a plurality of connecting portions 11. The plurality of exhaust portions 10 and the plurality of connecting portions 11 are sequentially and alternately provided in a first direction (i.e., the width direction of the main body 1 in the present embodiment). In other words, all areas of the main body 1 which are not the exhaust portions 10 are formed into connecting portions 11, and each of the connecting portions 11 is configured to bond to the bottom of the battery cell module 6. In this way, the connecting portions 11 can achieve large-area bonding between the main body 1 and the battery cell module 6, thereby improving the load-bearing capacity of the main body 1, while also reducing the risk of sealing failure caused by debonding of the main body 1 under various operating conditions. Furthermore, the alternating arrangement of the connecting portions 11 and exhaust portions 10 ensures a more even distribution of stress on the main body 1 when supporting the battery cell module 6, effectively increasing the stability of the connection between the main body 1 and the battery cell module 6.

More specifically, in the present embodiment, the top of the connecting portions 11 is bonded to the bottom of the battery cell module 6 using a structural adhesive 2. This effectively limits deformation caused by cyclic expansion of the battery cell module 6 and reduces the risk of cracking structural components (such as the housing) due to expansion forces, thereby improving the lifespan of the battery pack.

Furthermore, in the present embodiment, as shown in Figures 4 and 5, each of the connecting portions 11 is provided with a cavity 110 extending in a second direction (i.e., the length direction of the main body 1) through opposite end portions of the main body 1, thereby forming a double-layer structure. This cavity 110 can be filled with a gas such as air or a cushioning member, such as a cushioning foam, to form an impact-resistant buffer for the protective plate. This further enhances the structural stability of the main body 1 and its connection to the battery cell module 6, thereby preventing seal failure caused by ball impacts on the bottom of the protective plate and reducing the risk of deformation of the battery cell module 6 due to intrusion.

It should be noted that the thickness of cavity 110 is not specifically limited; It is preferably set to 10 mm to 15 mm. This range is the optimal choice, determined through a plurality of experiments, to maximize the above-described cushioning effect. Furthermore, if the width of the cavity 110 is too large, reinforcing ribs 111 can be provided within the cavity 110 to divide the cavity 110 into a plurality of sub-cavities, thereby ensuring the load-bearing capacity of the main body 1. Furthermore, when main body 1 is connected to the battery cell module 6, the second direction coincides with the formation direction of the battery cell module 6.

In the present embodiment, as shown in Figures 4 to 6, each exhaust portion 10 is formed into a recessed structure passing through opposite end portions of the main body 1 in the second direction. When the main body 1 is connected to the battery cell module 6, the opening of each exhaust portion 10 (located at the top of the main body 1) faces toward the explosion-proof valve 61 at the bottom of the battery cell module 6. In this way, the exhaust portion forms an exhaust channel corresponding to the explosion-proof valve 61, effectively directing the flow of high-pressure gas discharged by the explosion-proof valve 61 and thus preventing thermal runaway. Furthermore, the explosion-proof valve 61 is positioned above the recessed exhaust portion 10, effectively preventing the main body 1 from squeezing the explosion-proof valve 61. In other words, the exhaust portion 10 in the present embodiment not only provides an effective exhaust path for the explosion-proof valve 61 but also, while providing sufficient support rigidity within the main body 1, leaves space for the explosion-proof valve 61, thereby reducing the risk of the explosion-proof valve 61 being crushed and damaged in the battery cell 60.

Furthermore, as shown in Figure 5, the two side walls of the exhaust portion 10 in the present embodiment are formed into a bent structure in which the two side walls are symmetrical to each other. Such an arrangement relieves the stress on the battery cell 60 when the area of the explosion-proof valve 61 is impacted from the bottom. Specifically, the side wall of the exhaust portion 10 includes a first inclined section 101, a horizontal section 102, and a second inclined section 103, which are sequentially connected. The first inclined section 101 is connected to the bottom of the exhaust portion 10, and the second inclined section 103 is connected to the top of the connecting portion 11. It should be noted that the specific dimensions of the exhaust portion 10, such as its depth and the inclination of its side walls, are not particularly limited, as long as the exhaust portion can correspond to the explosion-proof valve 61 of the battery cell module 6 and achieve the above-described technical effects.

More specifically, a strip-shaped shielding member 3 extending in the second direction is provided on the horizontal section 102 of the side wall of the exhaust portion 10. This shielding member 3 abuts the bottom of the battery cell module 6 when the main body 1 is connected to the battery cell module 6. In the present embodiment, the shielding member 3 is made of MPP material (i.e., a polypropylene porous foam with pore size of less than 100 µm). This not only enhances the cushioning performance of the above-described bent structure, but also prevents the structural adhesive 2 at the top of the connecting portions 11 from overflowing into the exhaust portions 10. Furthermore, the bottom of the exhaust portions 10 is lined with a high-temperature resistant and fireproof component (such as flame-retardant foam) to form a high-temperature resistant and fireproof layer 4. This reduces the risk of the high-pressure gas discharged from the explosion-proof valve 61 burning through the protective plate in the event of thermal runaway of the battery cell module 6. The high-temperature resistant and fireproof layer 4 also provides a certain degree of insulation protection. However, this is not limiting, and the side walls of the exhaust portions 10 may also be provided with the above-described high-temperature resistant and fireproof component.

In addition, in the present embodiment, the main body 1 of the protective plate is further provided with a reinforcing layer 5. When the main body 1 is connected to the battery cell module 6, the reinforcing layer 5 is located on the bottom of the main body 1 away from the battery cell module 6. Furthermore, the reinforcing layer 5 in the present embodiment is formed from a PP glass fiber composite material (which is an existing material). This allows the reinforcing layer 5 to enhance the overall rigidity of the main body 1 to a certain extent. It also increases the resistance of the main body 1 to impact, puncture, scratch, and abrasion. It can also effectively improve the thermal insulation performance of the housing described below.

According to the protective plate of the present application, a plurality of exhaust portions 10 are provided on the top of the protective plate, so that when the main body 1 is connected to the battery cell module 6, the openings of the exhaust portions 10 face the explosion-proof valve 61 at the bottom of the battery cell module 6. The exhaust portions 10 pass through opposite end portions of the main body 1, forming exhaust channels corresponding to the explosion-proof valve 61. This effectively guides the flow of high-pressure gas discharged from the explosion-proof valve 61, thereby preventing thermal runaway. Furthermore, the explosion-proof valve 61 is correspondingly provided above the exhaust portion 10 formed into a recessed structure, effectively preventing the main body 1 from squeezing the explosion-proof valve 61. Furthermore, the main body 1 of the protective plate is bonded to the battery cell module 6 via the connecting portions 11, the connecting portions 11 and the exhaust portions 10 are alternately provided, and each of the connecting portion 11 is also provided with a cavity 110, which effectively reduces the risk of failure compared with the existing connection method of the combination of bolts and sealing gaskets.

In addition, according to the second aspect of the present application, a housing is provided, having the protective plate described above provided at the bottom of the housing.

In addition, according to the third aspect of the present application, a battery pack is provided, which is provided with the housing as described above.

Finally, it should be noted that the above embodiments are only used to illustrate the technical solutions of the present application, rather than to limit them. Although the present application has been described in detail with reference to the above-described embodiments, those skilled in the art should understand that they can still modify the technical solutions described in the above-described embodiments, or make equivalent replacements for some or all of the technical features therein. These modifications or replacements do not deviate the essence of the corresponding technical solutions from the scope of the technical solutions of the embodiments of the present application.

### INDUSTRIAL APPLICABILITY

The protective plate, housing and battery pack according to the present application are such that when the main body is connected to the battery cell module, the opening of the exhaust portion can face the explosion-proof valve at the bottom of the battery cell module, and the exhaust portion passes through the opposite end portions of the main body, that is, can form an exhaust channel corresponding to the explosion-proof valve, so as to effectively guide the flow of high-pressure gas discharged by the explosion-proof valve, thereby avoiding thermal runaway; In addition, the explosion-proof valve is correspondingly provided above the exhaust portions formed into a recessed structure, which can effectively avoid the main body squeezing the explosion-proof valve; Moreover, the main body of the protective plate is bonded to the battery cell module through the connecting portions, and the connecting portions and the exhaust portions are alternately provided, and each of the connecting portions is also provided with a cavity, which effectively reduces the risk of its failure.

## Claims

1. A protective plate, comprising a main body, **characterized in that**, the main body is provided with a plurality of exhaust portions and a plurality of connecting portions, and the plurality of exhaust portions and the plurality of connecting portions are sequentially and alternately provided in a first direction; each of the exhaust portions is formed into a recessed structure passing through opposite end portions of the main body in a second direction, and each of the connecting portions is provided with a cavity passing through the opposite end portions of the main body in the second direction; when the main body is connected to a battery cell module, the connecting portions are bonded to the battery cell module, and the openings of the exhaust portions face an explosion-proof valve of the battery cell module.

2. The protective plate according to claim 1, **characterized in that**, the first direction is perpendicular to the second direction, and when the main body is connected to the battery cell module, the second direction is the same as a formation direction of the battery cell module.

3. The protective plate according to claim 1, **characterized in that**, two side walls of the exhaust portion are formed into a bent structure in which the two side walls are symmetrical to each other; the side wall comprises a first inclined section, a horizontal section, and a second inclined section, which are sequentially connected, the first inclined section is connected to the bottom of the exhaust portion, and the second inclined section is connected to the top of the connecting portion.

4. The protective plate according to claim 3, **characterized in that**, the horizontal section is provided with a shielding member extending in the second direction; when the main body is connected to the battery cell module, the shielding member abuts the bottom of the battery cell module.

5. The protective plate according to claim 3, **characterized in that**, the interior of the exhaust portion is lined with a high-temperature resistant and fireproof component to form a high-temperature resistant and fireproof layer.

6. The protective plate according to claim 1, **characterized in that**, the top of the connecting portion is bonded to the bottom of the battery cell module.

7. The protective plate according to claim 1, **characterized in that**, the thickness of the cavity is 10 mm to 15 mm.

8. The protective plate according to claim 1, **characterized in that**, the main body is provided with a reinforcing layer, and when the main body is connected to the battery cell module, the reinforcing layer is located on the side of the main body away from the battery cell module.

9. A housing, **characterized in that**, the bottom of the housing is provided with the protective plate according to any one of claims 1 to 8.

10. A battery pack, **characterized in that**, the battery pack is provided with the housing according to claim 9.
